# EUROPÄISCHE PATENTSCHRIFT

(11) **EP 0 873 845 B1**
(45) Veröffentlichungstag und Bekanntmachung des Hinweises auf die Patenterteilung: **24.07.2002**
(21) Anmeldenummer: 98106312.6
(22) Anmeldetag: 07.04.1998
(51) Int. Cl.: B29C 49/04, B29C 47/22

(54) **Extrusionskopf für das Blasformen von Hohlkörpern**
Extrusion die for blowmoulding hollow articles
Filière d'extrusion pour moulage par soufflage de corps creux

(30) Priorität: 21.04.1997 DE 29707060 U
(43) Veröffentlichungstag der Anmeldung: 28.10.1998
(73) Patentinhaber: SIG Kautex GmbH & Co.KG, 53229 Bonn (DE)
(72) Erfinder: Tritsch, Olian, 53578 Windhagen-Günterscheid (DE)
(74) Vertreter: Valentin, Ekkehard, Dipl.-Ing.

(56) Entgegenhaltungen:
- DE-U- 29 707 060
- US-A- 4 212 620
- PATENT ABSTRACTS OF JAPAN vol. 008, no. 263 (M-342), 4. Dezember 1984 & JP 59 137114 A (FURUKAWA DENKI KOGYO KK), 7. August 1984
- PATENT ABSTRACTS OF JAPAN vol. 009, no. 067 (M-366), 27. März 1985 & JP 59 199220 A (EKUSERU KK), 12. November 1984

## Beschreibung

Die Erfindung betrifft einen Extrusionskopf für das Blasformen von Hohlkörpern aus Kunststoff, bei dem plastifizierter Kunststoff als schlauchförmiger Vorformling aus einem Düsenspalt extrudiert wird, den die Innenseite eines Düsenringes und die Außenseite eines zugehörigen Düsenkerns bilden, die zwecks Einstellung des Düsenspalts mittels Stellgliedern relativ zueinander radial verstellbar sind.

Durch die DE-A 35 12 097 ist zur Herstellung von Schläuchen, insbesondere von Isolierhüllen für elektrische Kabel oder Leitungen aus plastisch verformbaren Isolierstoffen, ein Extruderspritzkopf bekanntgeworden, bei dem Teile der Spritzwerkzeuge durch vier am Umfang der Matritze oder Pinole gleichmäßig verteilte Stellmittel zum Zentrieren des Werkzeugs quer zur Ausstoßrichtung verstellbar verstellbar sind. Die Zentrierung ist zur Einhaltung einer konzentrischen Ausformung des Extrudats erforderlich. Bei diesem bekannten Extruderspritzkopf sind die Stellmittel als hydraulisch arbeitende Stellkolben ausgebildet, wobei je zwei in einer Richtung, d.h. X- bzw. Y- Achse arbeitende Kolben gleichzeitig von einem Steuerkolben mittels eines Zweikantenfühlers und entsprechender Steuerleitungen betätigt sind. Hiermit läßt sich eine Korrektur bzw. Zentrierung in einer Hauptrichtung, d.h. entweder in der X- oder in der Y-Achse mit einer Einstellung erreichen, weil die beiden in jeweils derselben Hauptrichtung arbeitenden Stellkolben durch ihre Hydraulik untereinander so verbunden sind, daß sie nur einen Einstellbefehl benötigen.

Aus der US 4 212 620 A ist ein Extrusionswerkzeug zur Rohrherstellung bekannt, das einen verstellbaren Matrizenring aufweist, der mittels eines Klemmringes mit dem Werkzeugkörper verspannt ist. Die Verstellung läßt sich mittels Hebelarmen erreichen, die sowohl am Klemmring als auch am Matrizenring in Deckungslage zueinander angeordnet und jeweils relativ zueinander verschiebbar sind.

Der Erfindung liegt die Aufgabe zugrunde, einen gattungsgemäßen Extrusionskopf so zu gestalten, daß sich mit weniger baulichem Aufwand eine verbesserte Krafteinleitung bei vorzunehmenden Korrekturen ereichen läßt.

Diese Aufgabe wird erfindungsgemäß dadurch gelöst, daß ein den Düsenring ohne starre Verbindung konzentrisch umschließender Zentrierring ein darauf fest angeordnetes erstes Stellglied aufweist, das den Düsenring nur in X-Richtung verstellt, und ein rechtwinklig zu dem ersten Stellglied angeordnetes zweites Stellglied sowohl den Zentrierring als auch gleichzeitig den Düsenring nur in Y-Richtung verstellt. Es ist hierbei erkannt worden, daß mit den beiden in vorteilhafter Weise eine kreuztischartige Verschiebeeinheit bildenden Stellgliedern eine Krafteinleitung an zwei um 90° zueinander versetzten Stellen und eine gewünschte Verschiebung der Düse in jede Richtung zu erreichen ist, wenn neben der vorgesehenen direkten Krafteinleitung in der einen Hauptrichtung (X-Richtung) der Extrusionskopf weiterhin mit einem äußeren Zentrierring ausgebildet ist. Dieser läßt sich nämlich in die andere Hauptrichtung verstellen, und zwar unter gleichzeitiger mittelbarer Verstellung des Düsenringes in dieselbe Richtung, wobei das fest auf dem Zentrierring angeordnete erste Stellglied diese Verstellung entsprechend mitmacht. Um den Düsenring relativ zu dem Düsenkern quer zur Ausstoßrichtung des Vorformlings einzustellen, sind somit nur noch zwei und nicht mehr vier Stellglieder erforderlich. Die Zentrierung kann hierbei vor Produktionsbeginn einmalig vorgenommen werden und dann während der Produktion unverändert bleiben oder sie kann nach einem vorgegebenen Profil während des Ausstoßes eines Vorformlings durchgeführt werden.

Eine bevorzugte Ausgestaltung der Erfindung sieht vor, daß einem Krafteinleitungsmittel des ersten Stellgliedes ein in dem Düsenring festgelegter Beaufschlagungsbolzen und einem Krafteinleitungsmittel des zweiten Stellgliedes ein durch den Zentrierring hindurchgeführter, mit seinem vorderen Ende dem Außenmantel des Düsenringes frei zugewandter Führungsbolzen zugeordnet ist, wobei zwischen dem Führungsbolzen und dem Zentrierring eine mittelbare Kraftschlußverbindung besteht. Diese nimmt Kräfte in Y-Richtung auf und überträgt die Verstellbewegung über den Zentrierring auf die Düse. Die Verstellung bzw. Zentrierung läßt sich wahlweise mechanisch, z.B. mittels einer handverstellbaren Vorrichtung, elektromotorisch oder hydraulisch durchführen. Bei dem Krafteinleitungsmittel kann es sich daher beispielsweise um einen Kolben eines Hydraulikzylinders oder eine rotierende, auf einer Gewindespindel angeordnete Mutter handeln, die elektromotorisch bzw. mechanisch angetrieben wird, wobei eine Rotationsbewegung über geeignete Mittel in eine axiale Verstellung der Gewindespindel umgewandelt wird. Der am Düsenring festgelegte, in diesen vorteilhaft eingeschraubte Beaufschlagungsbolzen ist in einem zwischen dem Düsenring und dem Zentrierring vorgesehenen, ortsfesten Haltering des Extrusionskopfes mit Spiel angeordnet, so daß der der direkten Beaufschlagung des Düsenringes in X-Richtung dienende Beaufschlagungsbolzen im Rahmen dieses Spiels die von dem Düsenring und dem Zentrierring gleichzeitige Verstellbewegung in Y-Richtung bei Betätigung des zweiten Stellgliedes mitmachen kann.

Eine Ausgestaltung der Erfindung sieht vor, daß die beiden Stellglieder einschließlich ihrer Krafteinleitungsmittel baugleich sind. Die Herstellung und Lagerhaltung sowie auch die Montage sind damit erheblich vereinfacht. Dieses wird weiterhin dadurch unterstützt, daß die beiden Stellglieder mit einem Parallelgestänge am Extrusionskopf befestigt sind, das zudem insbesondere für eine mittige Krafteinleitung sorgt. Hierbei ist gegebenenfalls lediglich darauf zu achten, daß von den vorteilhaft als Parallelgestänge verwendeten Gewindebolzen diejenigen des ersten, auf den Beaufschlagungsbolzen für die X-Richtung einwirkenden ersten Stellgliedes kürzer sind, da sie mit einem vorderen Gewindeabschnitt in den Zentrierring eingeschraubt werden, während hingegen die Gewindebolzen des zweiten Stellgliedes länger sind und mit ihren vorderen Gewindeabschnitten in den ortsfesten Haltering des Extrusionskopfes eingeschraubt werden; gleichwohl könnten für beide Stellglieder auch gleichlange Parallelgestänge eingesetzt werden.

Weitere Vorteile und Merkmale der Erfindung ergeben sich aus den Ansprüchen und der nachfolgenden Beschreibung von in den Zeichnungen dargestellten Ausführungsbeispielen des Gegenstandes der Erfindung. Es zeigen:
- Fig. 1: in schematischer Darstellung die Vorderansicht - gesehen in Pfeilrichtung "A" gemäß Figur 2 - eines Extrusionskopfes mit zwei eine kreuztischartige Verschiebeeinheit bildenden Stellgliedern;
- Fig. 2: eine Teil-Längsansicht des Extrusionskopfes gemäß Fig. 1 mit mechanisch, von Hand zu verstellenden Stellgliedern, schematisch dargestellt; und
- Fig. 3: eine der Fig. 2 entsprechende Darstellung, mit demgegenüber hydraulischen Stellgliedern, schematisch dargestellt.

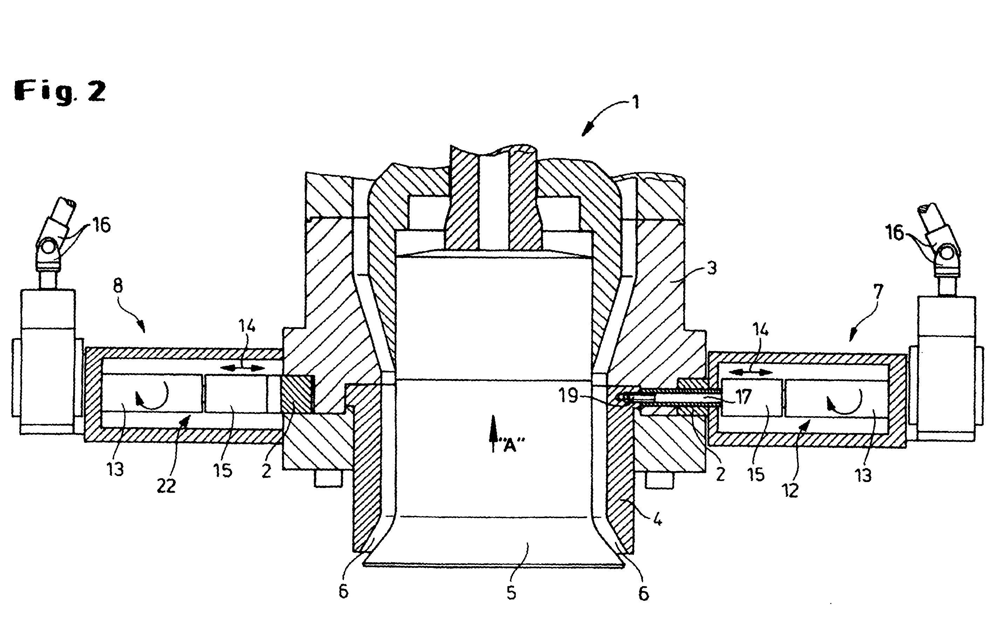

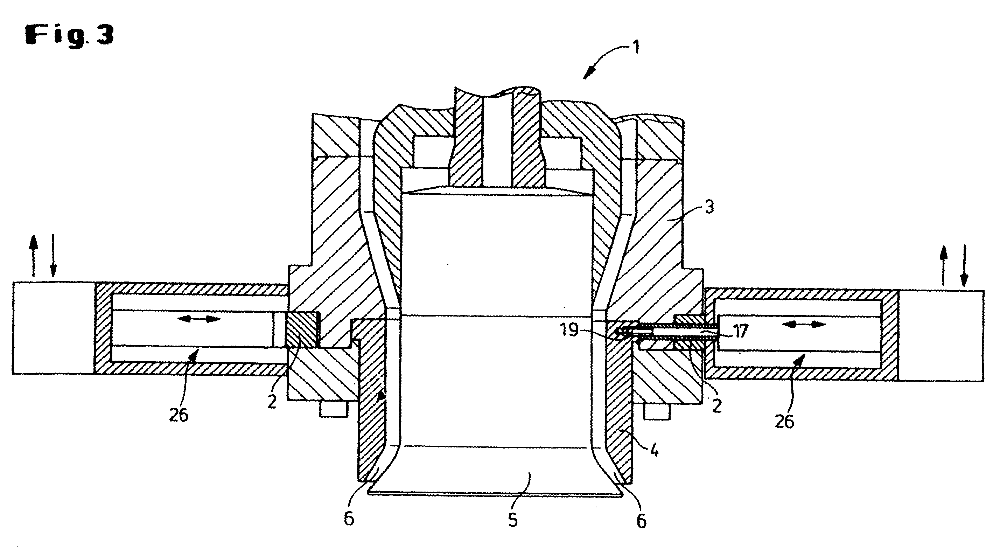

Ein Extrusionskopf 1 für das Blasformen von Hohlkörpern aus Kunststoff weist konzentrisch ineinander eingebaut einen - von außen nach innen - Zentrierring 2, einen ortsfesten Haltering 3 und einen Düsenring 4 auf, dessen Innenseite zusammen mit der Außenseite eines dazugehörigen Düsenkerns 5 einen Düsenspalt 6 (vgl. die Figuren 2 und 3) definiert. Zur Zentrierung des Extrusionskopfes 1 und damit zur Einhaltung einer konzentrischen Ausformung des aus dem Düsenspalt 6 austretenden Vorformlings sind zwei um 90° zueinander versetzte Stellglieder 7 bzw. 8 vorgesehen; diese erlauben es, durch direkte Krafteinleitung den Düsenring 4 in den beiden Hauptrichtungen, d.h. in der X- und der Y-Achse zu verstellen.

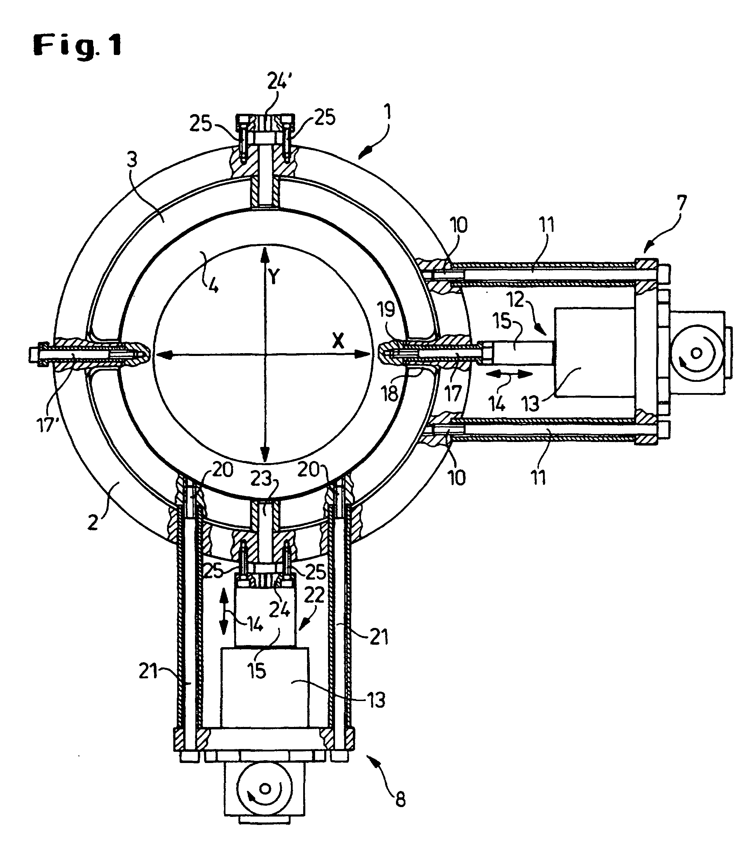

Von den beiden baugleichen Stellgliedern 7, 8 dient das erste Stellglied 7 zum Einstellen des Düsenringes 4 in Richtung der X-Achse. Es besitzt ein aus zwei mit einem vorderen Gewindeabschnitt 10 in den Zentrierring 2 eingeschraubte Gewindebolzen 11 bestehendes Parallelgestänge als Traggestell und weist ein Krafteinleitungsmittel 12 auf, das gemäß einer ersten Ausführung nach Figur 2 aus einer Spindelanordnung besteht, bei der die Rotationsbewegung einer Mutter 13 mit geeigneten, an sich bekannten Mitteln bzw. Maßnahmen in eine axiale Verstellbewegung (vgl. in den Figuren 1 und 2 den Pfeil 14) einer Gewindespindel 15 umgewandelt wird. Die Rotationsbewegung der Mutter 13 wird bei dieser Ausführung über ein nicht dargestelltes Handrad und eine Antriebsgestängeverbindung 16 mittels Getriebe mit starker Übersetzung in das Stellglied 7 - und auch in das zweite Stellglied 8, für das ein separates Handrad vorhanden ist - eingeleitet; statt der manuellen Handeinstellung könnte alternativ ein elektromotorischer Antrieb vorgesehen werden. Das Krafteinleitungsmittel 12 wirkt auf einen Beaufschlagungsbolzen 17 ein, der durch den Zentrierring 2 sowie den Haltering 3 - dort mit Luft bzw. Spiel 18 (vgl. Figur 1) - hindurchgeführt und mit einem vorderen Gewindeabschnitt 19 in den Düsenring 4 eingeschraubt ist.

Anders als das Stellglied 7 ist das für die Einstellungen in der Y-Achse zuständige Stellglied 8 im Ausführungsbeispiel mit den vorderen Gewindeabschnitten 20 von das Parallelgestänge bildenden Gewindebolzen 21 in den ortsfesten Haltering 3 eingeschraubt. Das Krafteinleitungsmittel 22 entspricht dem des Stellgliedes 7, d.h. es umfaßt eine rotierende Mutter 13 und eine in Pfeilrichtung 14 axial zu verstellende Gewindespindel 15 (vgl. Figur 2). in diesem Fall wirkt die Gewindespindel 15 und damit die axiale Verstellkraft allerdings auf eine Kraftschlußverbindung 24 in Form eines platten- bzw. scheibenartigen Brückengliedes ein, das gemäß Figur 1 mit zwei Schrauben 25 in dem Zentrierring 2 festgelegt ist. Ein Führungsbolzen 23, der durch den Zentrierring 2 und den ortsfesten Haltering 3 hindurchgeführt ist und mit seinem vorderen Stirnende dem Außenmantel des Düsenrings 4 freiliegend zugewandt ist, sorgt für die Führung des Zentrierringes 2 und unterstützt die mittige Krafteinleitung. Bei Betätigung des Stellgliedes 8 sorgt die Kraftschlußverbindung 24 für eine gleichzeitige Bewegung des Zentrierringes 2 - und über diesen - des Düsenringes 4 in Richtung der Y-Achse. Dies wird sichergestellt, indem sich der Beaufschlagungsbolzen 17 - und das in den Zentrierring 2 eingeschraubte Stellglied 7 - bewegungskonform ebenfalls mit in Richtung der Y-Achse verlagert.

Jeweils in diametraler Zuordnung zu dem Beaufschlagungsbolzen 17 bzw. dem Brückenglied 24 befinden sich in dem Extrusionskopf 1 ein weiterer solcher Beaufschlagungsbolzen 17' bzw. eine weitere Kraftschlußverbindung 24' als Brückenglied mit Schrauben 25. Diese gegenüberliegende Anordnung gewährleistet einerseits die Führung der Lage des in X- oder Y-Richtung verstellten Düsenringes 4; andererseits bietet sie die Möglichkeit, abhängig von den jeweiligen räumlichen Bedingungen am Aufstellort der Extrusionsmaschine die Stellglieder 7 und 8 an diesen Stellen anzubringen. Weiterhin ist es möglich, statt der mechanischen Krafteinleitungsmittel 12 die in Figur 3 schematisch gezeigten hydraulischen Krafteinleitungsmittel 26 vorzusehen.

## Patentansprüche

1. Extrusionskopf (1) für das Blasformen von Hohlkörpern aus Kunststoff, bei dem plastifizierter Kunststoff als schlauchförmiger Vorformling aus einem Düsenspalt extrudiert wird, den die Innenseite eines Düsenringes (4) und die Außenseite eines zugehörigen Düsenkerns (5) bilden, die zwecks Einstellung des Düsenspalts mittels Stellgliedern (7, 8) relativ zueinander radial verstellbar sind,
**dadurch gekennzeichnet,**
**daß** ein den Düsenring (4) ohne starre Verbindung konzentrisch umschließender Zentrierring (2) ein darauf fest angeordnetes erstes Stellglied (7) aufweist, das den Düsenring (4) nur in X-Richtung verstellt, und ein rechtwinklig zu dem ersten Stellglied (7) angeordnetes zweites Stellglied (8) sowohl den Zentrierring (2) als auch gleichzeitig den Düsenring (4) nur in Y -Richtung verstellt.

2. Extrusionskopf nach Ansruch 1,
**dadurch gekennzeichnet,**
**daß** die beiden Stellglieder (7, 8) eine kreuztischartige Verschiebeeinheit bilden.

3. Extrusionskopf nach Anspruch 1 oder 2,
**dadurch gekennzeichnet,**
**daß** einem Krafteinleitungsmittel (12; 26) des ersten Stellgliedes (7) ein in dem Düsenring (4) festgelegter Beaufschlagungsbolzen (17) und einem Krafteineitungsmittel (22; 26) des zweiten Stellgliedes (8) ein durch den Zentrierring (2) hindurchgeführter, mit seinem vorderen Ende dem Außenmantel des Düsenringes (4) frei zugewandter Führungsbolzen (23) zugeordnet ist, wobei zwischen dem Führungsbolzen (23) und dem Zentrierring (2) eine mittelbare Kraftschlußverbindung (24) besteht.

4. Extrusionskopf nach einem der Ansprüche 1 bis 3,
**dadurch gekennzeichnet,**
**daß** die beiden Stellglieder (7, 8) einschließlich ihrer Krafteinleitungsmittel (12; 26) baugleich sind.

5. Extrusionskopf nach einem der Ansprüche 1 bis 4,
**dadurch gekennzeichnet,**
**daß** die beiden Stellglieder (7, 8) in einem Parallelgestänge (11; 21) angeordnet sind.

## Claims

1. An extrusion nozzle (1) for blow molding hollow bodies of plastic, wherein plasticized plastic is extruded in the form of a tubular preform from a nozzle gap that is formed by the inner side of a nozzle ring (4) and the outer side of a corresponding nozzle core (5), and wherein the nozzle ring and the nozzle core can be radially adjusted relative to one another by means of actuators (7, 8) in order to adjust the nozzle gap,
**characterized by** the fact
that a centering ring (2) that concentrically encircles the nozzle ring (4) without being rigidly connected thereto contains a first actuator (7) that is rigidly arranged on the centering ring and only adjusts the nozzle ring (4) in the X-direction, and by the fact that a second actuator (8) that is arranged perpendicular to the first actuator (7) simultaneously adjusts the centering ring (2) and the nozzle ring (4), namely only in the Y-direction.

2. The extrusion nozzle according to Claim 1,
**characterized by** the fact
that the two actuators (7, 8) form a translational motion unit similar to a compound table.

3. The extrusion nozzle according to Claim 1 or 2,
**characterized by** the fact
that an actuating bolt (17) that is fixed in the nozzle ring (4) is assigned to a force application means (12; 26) of the first actuator (7), and by the fact that a guide bolt (23) that extends through the centering ring (2) and freely faces the outer surface of the nozzle ring (4) with its front end is assigned to a force application means (22; 26) of the second actuator (8), wherein an indirect non-positive connection (24) exists between the guide bolt (23) and the centering ring (2).

4. The extrusion nozzle according to one of Claims 1 - 3,
**characterized by** the fact
that the two actuators (7, 8), as well as their force application means (12; 26), are designed identically.

5. The extrusion nozzle according to one of Claims 1 - 4,
**characterized by** the fact
that the two actuators (7, 8) are arranged in a translational motion rod assembly (11; 21).

## Revendications

1. Tête d'extrusion (1) pour le soufflage de corps creux en matière plastique, dans laquelle la matière plastifiée est extrudée sous forme d'ébauche tubulaire hors d'une ouverture de buse, qui est formée par la face interne d'une bague de buse (4) et la face externe d'un noyau de buse (5) en faisant partie, ces faces étant réglables dans le sens radial l'une par rapport à l'autre au moyen de modulateurs (7, 8) dans le but de définir l'ouverture de buse,
**caractérisée en ce que**
un anneau de centrage (2) entourant de manière concentrique sans liaison rigide la bague de buse (4) présente un premier modulateur (7) fixé fermement sur lui, qui règle la bague de buse (4) seulement dans le sens X et qu'un deuxième modulateur (8) positionné à angle droit du premier modulateur (7) règle aussi bien l'anneau de centrage (2) qu'en même temps la bague de buse (4) seulement dans le sens Y.

2. Tête d'extrusion selon la revendication 1,
**caractérisée en ce que**
les deux modulateurs (7, 8) constituent une unité de transfert de type table à mouvement croisé.

3. Tête d'extrusion selon la revendication 1 ou 2,
**caractérisée en ce que**
à un moyen de fourniture d'énergie (12 ; 26) du premier modulateur (7) est associé un goujon de percussion (17) fixé dans la bague de buse (4) et à un moyen de fourniture d'énergie (22 ; 26) du deuxième modulateur (8) est associé un goujon de guidage (23) introduit à travers l'anneau de centrage (2)
et dont l'extrémité avant est tournée librement vers la chemise extérieure de la bague de buse (4), une liaison mécanique (24) indirecte existant entre le goujon de guidage (23) et l'anneau de centrage (2).

4. Tête d'extrusion selon une des revendications 1 à 3,
**caractérisée en ce que**
les deux modulateurs (7, 8), y compris leurs moyens de fourniture d'énergie (12 ; 26), sont de conception identique.

5. Tête d'extrusion selon une des revendications 1 à 4,
**caractérisée en ce que**
les deux modulateurs (7, 8) sont disposés dans un rail parallèle (11 ; 21).
